**Europäisches Patentamt**

(19) **European Patent Office**

**Office européen des brevets**

(11) Veröffentlichungsnummer: **0 047 552**
**B1**

(12) # EUROPÄISCHE PATENTSCHRIFT

(45) Veröffentlichungstag der Patentschrift:
**12.10.83**

(51) Int. Cl.³: **G 11 B 15/44**

(21) Anmeldenummer: **81200942.1**

(22) Anmeldetag: **27.08.81**

(54) Antriebsvorrichtung für ein auf Spulen wechselweise auf- und abwickelbares Speicherband.

(30) Priorität: **30.08.80 DE 3032807**

(43) Veröffentlichungstag der Anmeldung:
**17.03.82 Patentblatt 82/11**

(45) Bekanntmachung des Hinweises auf die Patenterteilung:
**12.10.83 Patentblatt 83/41**

(84) Benannte Vertragsstaaten:
**DE FR GB IT NL SE**

(56) Entgegenhaltungen:
**DE-A-2 812 935**
**FR-A-2 038 682**
**FR-A-2 284 947**
**US-A-3 480 230**
**US-A-3 684 209**
**US-A-3 813 690**
**US-A-4 173 320**

(73) Patentinhaber: **Philips Patentverwaltung GmbH,**
**Steindamm 94, D-2000 Hamburg 1 (DE)**

(84) Benannte Vertragsstaaten: **DE**

(73) Patentinhaber: **N.V. Philips' Gloeilampenfabrieken,**
**Groenewoudseweg 1, NL-5621 BA Eindhoven (NL)**

(84) Benannte Vertragsstaaten: **FR GB IT NL SE**

(72) Erfinder: **Kommoss, Klaus, Am Rabenbaum 26,**
**D-6330 Wetzlar-Naunheim (DE)**
Erfinder: **Schütte, Heinz, Former Strasse 33,**
**D-6330 Wetzlar (DE)**

(74) Vertreter: **Kupfermann, Fritz-Joachim et al, Philips**
**Patentverwaltung GmbH**
**Billstrasse 80 Postfach 10 51 49,**
**D-2000 Hamburg 28 (DE)**

Antriebsvorrichtung für ein auf Spulen wechselweise auf- und abwickelbares Speicherband

Die Erfindung bezieht sich auf eine Antriebsvorrichtung für ein auf Spulen wechselweise auf- und abwickelbares Speicherband, insbesondere Magnetband, mit zwei das Speicherband bewegenden angetriebenen Tonwellen, an die je nach Bewegungsrichtung des Speicherbandes eine zugeordnete und jeweils auf einem Schwenkhebel angeordnete Andruckrolle schaltbar ist, wobei die Schwenkhebel von einer angetriebenen Steuerplatte wechselweise verschwenkbar sind, die ihrerseits zwei fixierbare Endlagen besitzt, und mit zwei Wickeldornen für die Spulen, die wechselweise über ein Schwenkgetriebe, dessen Schwenklage von der Antriebsmotordrehrichtung abhängig ist, an den Antriebsmotor anschaltbar sind.

Eine derartige Antriebsvorrichtung ist aus der US-PS 3 684 209 bekannt. Die Steuerplatte besteht dabei aus einem um eine Achse schwenkbaren doppelarmigen Hebel. Ein Hebelarm ist mit divergierenden Auslegern versehen, welche den einen oder anderen Schwenkhebel mit der entsprechenden Andruckrolle von der Tonwelle wegdrücken. Die Steuerplatte ist verschwenkbar mittels eines auf einem Zahnrad exzentrisch gelagerten Zahnradnockens, der in eine Gabel der Steuerplatte eingreift. Die Umschaltung der Wickeldorne erfolgt von der Steuerplatte aus über ein Übertragungsgestänge. Für die Tonwellen ist ein getrennter Antrieb vorgesehen.

Dieser Aufbau benötigt in einem Kassettenrecorder relativ viel Raum. In Kassettenrecordern, die insbesondere für den Betrieb in Kraftfahrzeugen vorgesehen sind, steht nur ein äusserst begrenzter Raum zur Verfügung. Räumlich ausladende, insbesondere flächige Konstruktionen sind mithin ungeeignet.

Aus der DE-OS 24 40 824 ist es bekannt, den wahlweisen Antrieb der Wickeldorne über eine Schwinge vorzunehmen, auf der Übertragungsräder angeordnet sind. Die Schwinge schwingt um die Motorwelle und legt entsprechend der Drehrichtung des Motors, über Reibungskraft mitgenommen, das Übertragungsrad entweder an die Welle des einen oder die Welle des anderen Wickeldornes an.

Es ist Aufgabe der Erfindung, eine Antriebsvorrichtung zu schaffen, bei der allein durch das Ändern der Drehrichtung des Antriebsmotors alle Funktionen automatisch auf den Betrieb in entgegengesetzter Laufrichtung umschalten.

Die gestellte Aufgabe ist bei einer Antriebsvorrichtung der eingangs erwähnten Art erfindungsgemäss dadurch gelöst, dass das Schwenkgetriebe während des Laufbetriebes ein dem jeweils angetriebenen Wickeldorn zugeordnetes Wickelrad antreibt, dass die geradlinig verschiebbare Steuerplatte Umschalttriebbereiche aufweist, die mit jeweils einem ersten Umschaltrad des jeweils angetriebenen Wickeldorns zusammenarbeiten, dass beim Drehrichtungswechsel und dem dadurch verursachten Umschwenken des Schwenkgetriebes, bei dem das bis dahin angetriebene Wickelrad stillgesetzt und das stillstehende Wickelrad in umgekehrter Drehrichtung in Umlauf versetzt werden, mittels des ebenfalls in Umlauf versetzten Umschaltrades die Steuerplatte so verschoben wird, dass sie über einen Hebeltrieb die zu dem in Umlauf versetzten Umschaltrad gehörende Andruckrolle an die zugehörige Tonwelle anlegt bei gleichzeitigem Abheben der anderen Andruckrolle.

Dieser Aufbau der Antriebsvorrichtung hat zur Folge, dass die Drehrichtungsumkehr des Antriebsmotors in einer Art Kettenreaktion veranlasst, dass eine Funktionsumkehr jeweils eine weitere Funktionsumkehr nach sich zieht, bis alle Antriebsteile auf die Funktion in der Gegenrichtung umgeschaltet sind.

Durch die Verwendung einer geradlinig verschiebbaren Steuerplatte mit auf ihr angeordneten Triebbereichen für die Umschaltung bleibt der Platz innerhalb des Gerätes frei zum Anordnen der für den Bandlaufbetrieb unerlässlichen Räder, wie Übertragungszahnräder und Schwungscheiben. Durch das Umlegen des Schwenkgetriebes, welches aufgrund der Drehrichtungsänderung von allein vor sich geht, wird auch die Steuerplatte verschoben, und diese Steuerplatte verstellt dann ihrerseits die Andruckrollen. Damit werden ohne irgendwelche Zusatzmassnahmen sämtliche Umstellbewegungen allein dadurch in Gang gesetzt, dass der Antriebsmotor seine Drehrichtung ändert.

Eine weitere Ausgestaltung der Erfindung ist dadurch gekennzeichnet, dass das Schwenkgetriebe aus einer Schwinge besteht und wenigstens einem an ihr gelagerten Schwingenrad, dem ein Kommutator zugeordnet ist, der beim Ausbleiben von Steuersignalen infolge des Stillstehens eine Drehrichtungsumkehr des Antriebsmotors veranlasst. Durch die Anbringung des Kommutators auf einem Schwingenzahnrad wird dieses Schwingenzahnrad ausser zum Antreiben der Wickeldorne zugleich zur Überwachung des Gerätebetriebs eingesetzt.

Eine weitere Ausgestaltung der Erfindung ist dadurch gekennzeichnet, dass auf dem freien Schwingenende übereinander zwei Schwingenräder angeordnet sind, dass eines der Schwingenräder vom Antriebsmotor ständig angetrieben ist und dass dieses Schwingenzahnrad das andere, mit dem Kommutator versehene Schwingenrad über die eine Rutschkupplung mitnimmt. Die Zahnräder auf der Schwinge sorgen auf diese Weise unter Zuhilfenahme der zwischen ihnen angeordneten Rutschkupplung für eine Drehmomentbegrenzung an den Wickeldornen. Auf diese Weise wird nur eine drehmomentbegrenzende Rutschkupplung für beide Wickeldorne benötigt.

Eine weitere Ausgestaltung der Erfindung ist dadurch gekennzeichnet, dass das mit dem Kommutator versehene Schwingenzahnrad nach Massgabe der in einer Schwenkstellung befindlichen Schwinge das in der einen Schwenkstellung erreichbare Wickelrad und das andere, ständig angetriebene Schwingenrad ein auf demselben Wickeldorn wie das angetriebene Wickelrad und das erste Umschaltrad befindliches zweites Umschaltrad antreibt. Der Antrieb treibt damit über die Schwingenräder je nach Schwenkstellung des Schwenkgetriebes das zum zugeordneten Wickeldorn gehörende Wickelzahnrad über die Rutschkupplung und das zugeordnete Umschaltrad direkt an, das ausserhalb der Umschaltzeiten im angetriebenen Zustand leerläuft.

Eine weitere Ausgestaltung der Erfindung ist dadurch gekennzeichnet, dass bei angeschwenkter Kopfträgerplatte während des schnellen Vor- bzw. Rücklaufes die Schwingenräder des Schwenkgetriebes mittels eines Kurzschlussrades überbrückt sind. Mit Hilfe dieses Kurzschlussrades wird erreicht, dass im Falle des schnellen Vor- oder Rücklaufes die Rutschkupplung ausgeschaltet ist. Das volle Antriebsmoment liegt damit während dieser Zeiten an dem jeweils angetriebenen Wickeldorn.

Nach einer weiteren Ausgestaltung der Erfindung bestehen die Triebbereiche der Steuerplatte aus Zahnstangensegmenten, die mit den als Umschaltritzeln ausgebildeten ersten Umschalträdern zusammenwirken. Solche Zahnstangensegmente ermöglichen einen exakten Eingriff.

Nach einer weiteren Ausgestaltung der Erfindung sind die ersten und zweiten Umschalträder auf den Wickelwellen der Wickeldorne frei drehbar gelagert. Für die Umschalträder werden damit keine weiteren Wellen und kein weiterer Raum zum Anordnen benötigt.

Eine weitere Ausgestaltung der Erfindung ist dadurch gekennzeichnet, dass die Zahnstangensegmente in der Länge und Lage zu den Umschaltritzeln so bemessen bzw. angeordnet sind, dass das Zahnstangensegment, welches beim Umlegen des Schwenkgetriebes mit dem in Umlauf versetzten ersten Umschaltrad bzw. -ritzel in Eingriff kommt, die Steuerplatte über das zugeordnete Zahnstangensegment aus einer Endlage in die entgegengesetzte Endlage verschiebt, in der es ausser Eingriff kommt, während das andere Zahnstangensegment, das zuvor ausser Eingriff war, mit dem nun freilaufenden Umschaltradritzel in Eingriff kommt. Durch die Längenbegrenzung der Zahnstangensegmente und ihre Anordnung wird damit erreicht, dass die Segmente sich selbst ausser Eingriff bringen.

Es ist weiterhin vorteilhaft, wenn die Steuerplatte mittels einer Totpunktfeder in ihren beiden Endlagen fixiert ist. Diese Endlagenfixierung sorgt für einen einwandfreien Eingriff während des Bandlaufbetriebes.

Eine weitere Ausgestaltung der Erfindung ist dadurch gekennzeichnet, dass die die Andruckrollen tragenden Schwenkhebel als Winkelhebel ausgebildet und an einer den Tonkopf tragenden Kopfträgerplatte in ihrem Knickbereich schwenkbar gelagert sind, dass die Winkelhebel an einem Winkelarmende die Andruckrolle tragen, dass am anderen Winkelarmende eine Zugfeder angreift und dass die Kopfträgerplatte entgegen der Kraft von Federn mit dem Tonkopf und den Andruckrollen vom Speicherband abhebbar ist.

Schliesslich ist nach einer weiteren Ausgestaltung der Erfindung vorgesehen, dass die an einem Chassisrand angeordnete Steuerplatte auf einem am angrenzenden Chassisrand angeordneten doppelarmigen Stellhebel und dieser wieder über einen am weiter folgenden Chassisrand angeordneten Schieber vom Schwenkgetriebe ausgehende Umschaltbewegungen auf die vom Schieber verschwenkbaren Schwenkhebel weitergibt. Die Umschaltung erfolgt dabei über Bauteile, die den Mittelteil des Laufwerkes umgehen.

Die Erfindung wird anhand des in der Zeichnung dargestellten Ausführungsbeispiels näher erläutert. Es zeigen:

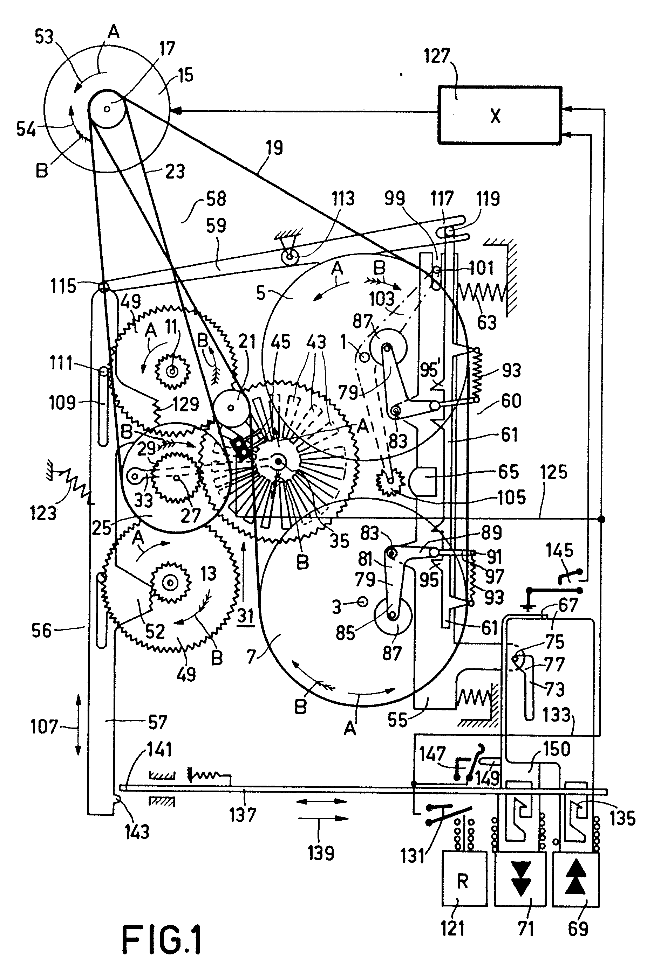

Fig. 1 eine schematische Darstellung einer Draufsicht auf die Antriebsvorrichtung nach der Erfindung zusammen mit einer angedeuteten elektrischen Schaltung,

Fig. 2 eine schaubildliche Darstellung der Antriebsvorrichtung nach Fig. 1 zur besseren Veranschaulichung der miteinander zusammenwirkenden Bauteile.

Die Antriebsvorrichtung dient insbesondere einem Reversierbetrieb bei Kassettenrecordern. Ein solcher Reversierbetrieb hat den Vorteil, dass die Kassette nicht ständig aus dem Gerät herausgenommen werden muss, sondern ohne Herausnahme im ständigen Vor- und Rücklauf abgespielt werden kann.

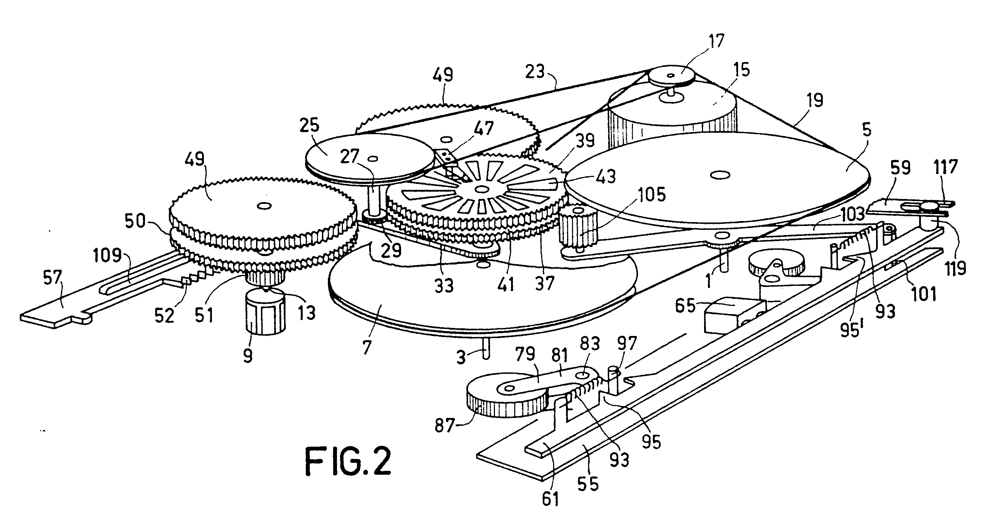

Im einzelnen sind zwei Tonwellen 1 und 3 vorgesehen, die mit Schwungrädern 5 und 7 versehen sind. Die Wickeldorne 9 (Fig. 2) sind an Antriebswellen 11 und 13 angeordnet.

Zum Antreiben der Antriebsvorrichtung dient ein in der Drehrichtung umkehrbarer Antriebsmotor 15. Eine über eine Seilrolle 17 des Antriebsmotors laufende Pese 19 treibt die Schwungräder 5 und 7 an. Ein zusätzliches Spannrad 21 sorgt für die erforderliche Pesenspannung. Auf der Seilrolle 17 ist eine weitere Pese 23 geführt, die ein Antriebszahnrad 25 antreibt. Auf der Welle 27 des Antriebszahnrades 25 ist ein Antriebsritzel 29 festgesetzt.

Mit dem Antriebsritzel 29 des Antriebszahnrades 25 arbeitet ein Schwenkgetriebe 31 zusammen. Dieses Schwenkgetriebe 31 besteht aus einer Schwinge 33, die exzentrisch zur Antriebsradwelle 27 im Bereich des Antriebszahnrades 25 an dem nicht dargestellten Chassis des Gerätes schwenkbar gelagert ist. An dem freien Ende 35 der Schwinge 33 sind parallel zueinander und übereinander ein Übertragungszahnrad 37 und ein Kommutatorzahnrad 39 drehbar gelagert. Beide Zahnräder 37 und 39 sind über eine Rutschkupplung 41 miteinander verbunden. Das Übertragungszahnrad 37 kämmt ständig mit dem Antriebsritzel 29 des Antriebszahnrades 25. Das Kommutatorzahnrad 39 ist an seiner Oberseite mit einem Kommutatorring 43 versehen, der von einer mit Federkontakten 45 versehenen Kommutatorvorrichtung 47 abgegriffen wird.

Drehfest mit den Wickelwellen 11 und 13 verbunden sind auf ihnen in Fig. 2 oben dargestellte Wickelzahnräder 49 angeordnet. Parallel zu den Wickelzahnrädern 49 befinden sich auf den Wickelwellen 11 und 13 Umschaltzahnräder 50. Diese Umschaltzahnräder 50 sind auf den Wickelwellen 11 und 13 frei drehbar. Starr gekoppelt mit den Umschaltzahnrädern 50 sind Umschaltritzel 51, die mit Zahnstangensegmenten 52 zusammenwirken. Die Umschaltzahnräder 50 und Ritzel 51 haben mit dem Bandantrieb der Wickeldorne 9 nichts zu tun und sind nur zur Konstruktionsvereinfachung auf den Wickelwellen 11 und 13 frei drehbar angeordnet. Der Abstand der Wickelzahnräder 49 und der Umschaltzahnräder 50 entspricht dem Abstand der Zahnräder 39 und 37 der Schwinge 33. Desgleichen fallen die Wirkebenen der oberen Zahnräder 39 und 49 sowie der unteren Zahnräder 37 und 50 in gleiche Horizontalebenen.

Die Umschaltung von der Vorwärts- in die Rückwärtsrichtung erfolgt mit Hilfe des Antriebsmotors 15. Die Vorwärtsrichtung ist dabei mit glatten Pfeilen 53 angedeutet, die stellvertretend für alle glatten Pfeile im Bereich des Motors 15 die Ziffer 53 tragen. Die Rückwärtsrichtung ist angegeben durch gefiederte Pfeile 54.

Ausser dem elektrisch bewirkten Richtungswechsel sind auch mechanische Richtungswechsel erforderlich, indem nämlich der Antrieb von Tonwelle 1 und Wickelwelle 11 umgeschaltet werden muss auf Tonwelle 3 mit Wickelwelle 13 und umgekehrt. Zur mechanischen Umschaltung dienen eine an einem langen Chassisrand 56 längsverschiebliche Steuerplatte 57, ein von ihr verstellbarer, an dem schmalseitig angrenzenden Chassisrand 58 angeordneter doppelarmiger Stellhebel 59 und ein vom Stellhebel 59 verstellbarer längs des in der Reihe wieder folgenden langen Chassisrandes 60 folgender Kopfträgerschieber 61. Die Steuerplatte 57 bestimmt mithin die Bewegungen des Kopfträgerschiebers 61 über den Steuerhebel 59. Die Verbindung zwischen Steuerplatte 57, Stellhebel 59 und Kopfträgerschieber 61 erfolgt über Gelenke 115 und 119. Die Kopfträgerplatte 55 ist im Gerät mit Hilfe von Druckfedern 63 abgestützt, welche die Kopfträgerplatte mit dem Tonkopf gegen das nicht dargestellte Speicherband drücken. Für schnellen Vor- und schnellen Rücklauf ist es ratsam, den Tonkopf 65 von dem Speicherband abzuheben. Dies erfolgt mit Hilfe von Konturenplatten 67, die mit der Taste 69 für schnellen Vorlauf und der Taste 71 für schnellen Rücklauf verbunden sind. In der jeweiligen Konturenplatte befindet sich eine Kontur 73, in die ein Stift 75 der Kopfträgerplatte 55 eingreift. Beim Eindrücken einer der Tasten 69 und 71 läuft der Stift 75 auf einer schrägen Fläche 77 auf und zieht die Kopfträgerplatte 55 von dem Speicherband entgegen der Wirkung der Federn 63 ab.

Auf der Kopfträgerplatte 55 sind Winkelhebel 79 im Eckbereich 81 um Achsen 83 schwenkbar gelagert. Die Winkelhebel tragen an einem Armende 85 eine Andruckrolle 87. Das andere Armende 89 wird von einer Zugfeder 93 erfasst, die es mit dem Kopfträgerschieber 61 verbindet. Der Kopfträgerschieber 61 hat ausserdem Anschlagnasen 95, die gegen die Anlenkungsstifte 97 der Zugfedern 93 stossen können.

Die Kopfträgerplatte 55 ist mit einer Gabelführung 99 versehen. In dieser Gabelführung 99 ist ein Stift 101 geführt. Dieser Stift 101 gehört zu einem doppelarmigen Kipphebel 103, der um die Tonwelle 1 frei drehbar ist. An dem dem Ende mit dem Stift 101 gegenüberliegenden Ende des Kipphebels 103 befindet sich ein Kurzschlusszahnrad 105. Dieses Kurzschlusszahnrad 105 kann die Schwingenzahnräder 37 und 39 miteinander verbinden und damit die Reibungskupplung 41 in ihrer Wirkung ausschalten.

Die Steuerplatte 57 ist in Richtung eines Doppelpfeiles 107 längsverschieblich, wobei ihre Langlöcher 109 in ortsfesten Stiften 111 entlanggleiten. Die Langlöcher 109 begrenzen den Verschiebeweg der Steuerplatte 57. An der Steuerplatte sind die bereits erwähnten Zahnstangensegmente 52 angeordnet, welche im Eingriffsfall mit den Umschaltritzeln 51 kämmen. Der doppelarmige Stellhebel 59, der um ein Gelenk 113 schwenkbar ist, hat eine Gelenkverbindung 115 mit der Steuerplatte 57. Der doppelarmige Stellhebel 59 muss deshalb den Bewegungen der Steuerplatte 57 folgen. An dem dem Gelenk 115 gegenüberliegenden Ende ist der doppelarmige Stellhebel 59 mit einer Gabelführung 117 versehen, in der ein Mitnehmerstift 119 geführt ist, der zu dem Kopfträgerschieber 61 gehört. Bewegungen der Steuerplatte 57 werden damit unmittelbar auf den Kopfträgerschieber 61 übertragen.

Im folgenden soll nun unter vorläufiger Ausserachtlassung der Tasten für schnellen Vorlauf 69, für schnellen Rücklauf 71 und für handbeeinflussten Reversierbetrieb 121 der Reversierbetrieb in seinem automatischen Ablauf erläutert werden.

Es sei angenommen, die Seilrolle 17 läuft in Richtung des glatten Pfeiles 53 um. In diesem Fall ist die Schwinge 33 in Richtung des glatten Pfeiles verschwenkt, und das Kommutatorzahnrad 39 kämmt mit dem Wickelzahnrad 49 der Wickelwelle 11. Der Antriebsdorn 9 der Wickelwelle 11 wird damit angetrieben und wickelt das ihm zugeführte Speicherband auf. Das Wickelzahnrad 49 der Wickelwelle 13 läuft frei und lässt das Abwickeln des Bandes von dieser Welle zu. Die Steuerplatte 57 ist in Richtung des glatten Pfeiles verschoben, und eine Totpunktfeder 123 hält die Steuerplatte 47 in dieser Endstellung. Eine der Zugfedern 93 zieht die zu der Tonwelle 1 gehörende Andruckrolle 87 gegen die Tonwelle 1. Die Tonwelle 1 und das Schwungrad 5 laufen in Richtung des glatten Pfeiles um. Tonwelle 1 und zugeordnete Andruckrolle 87 führen das Speicherband mit der vorgegebenen Geschwindigkeit an dem Tonkopf 65 vorbei. Am Ende dieses Banddurchlaufes wird die Wickelwelle 13 vom Bandende angehalten.

Zugleich mit dem Anhalten der Wickelwelle 13 bleibt auch das Wickelzahnrad 49 der Wickelwelle 11 stehen, weil das Speicherband sie anhält.

Damit bleibt auch das Kommutatorzahnrad 39 stehen. Der Kommutatorring 43 steht damit auch still, und die Kommutatorvorrichtung 47 gibt ein Kommando ab, dass der Kommutatorring 43 und das Kommutatorzahnrad 39 stillstehen. Über eine Steuerleitung 125 wird ein entsprechendes Signal an eine Umkehrschaltung 127 abgegeben. Diese Umkehrschaltung verarbeitet das Signal in der Art, dass sie die Drehrichtung des Motors 15 umkehrt. Der Motor 15 läuft nun in Richtung des gefiederten Pfeiles 54 an. Auch das Antriebsrad 25 wird in Richtung des gefiederten Pfeiles in Umlauf versetzt. Das Antriebsritzel 29 nimmt nun über das Übertragungszahnrad 37 die Schwinge 33 mit in Richtung des gefiederten Pfeiles und schwenkt sie um. Die Schwingenzahnräder 37 und 39 kommen damit mit dem Umschaltzahnrad 50 und dem Wickelzahnrad 49 der Wickelwelle 13 in Eingriff und drehen mit. Das Umschaltritzel 51 der Wickelwelle 13 wälzt sich an dem Zahnstangensegment 52 ab und schiebt die Steuerplatte 57 in Richtung des gefiederten Pfeiles über den Totpunkt der Feder 123 hinweg. Der Verschiebevorgang ist beendet, wenn die Druckplatte 57 ihre andere Endstellung erreicht hat, in der sie mittels der Übertotpunktfeder 123 fixiert ist. In dieser Endstellung kämmt das Zahnstangensegment 129 mit dem Umschaltritzel 51 des Wickeldornes 11. Das Zahnstangensegment 52 hat sich von dem Umschaltritzel 51 der Wickelwelle 13 getrennt.

Über den doppelarmigen Stellhebel 59 ist, gekuppelt mit der Steuerplatte 57, der Kopfträgerschieber 61 in Gegenrichtung verschoben worden. Das bedeutet, dass die Nase 95' des Kopfträgerschiebers 61 den Winkelhebel 79 von der Tonwelle 1 weggedrängt hat und die Zugfeder 93 im Bereich der Tonwelle 3 den entsprechenden Winkelhebel 79 mit der Andruckrolle 87 an die Tonwelle 3 angeschwenkt hat. Damit ist die automatische Richtungsumkehr abgeschlossen, und das Speicherband wird nunmehr in Gegenrichtung abgespielt, wobei beide Tonwellen und insbesondere die nun aktive Tonwelle 3 in Richtung des gefiederten Pfeiles umlaufen.

Ausser dem automatischen Reversieren ist auch noch ein Eingriff von Hand möglich. Eine Eingriffmöglichkeit besteht darin, eine Reversiertaste 121 zu drücken. Durch das Drücken dieser Reversiertaste lässt sich ein Wischschalter 131 betätigen, der über eine Leitung 133 ein Reversiersignal an die Umkehrschaltung 127 abgibt. Die Umkehr der Abspielbewegung lässt sich somit jederzeit von Hand einleiten. Die Umschaltvorgänge laufen, wie zuvor beschrieben, ab.

Es ist nun üblicherweise aber auch nötig, durch schnellen Vorlauf oder Rücklauf schnell an einen anderen bespielten Bereich des Speicherbandes heranzukommen. Hierzu dienen die Tasten 69 und 71. Wird die Taste 69 für schnellen Vorlauf gedrückt, dann schiebt diese über eine Kulisse 135 eine Riegelstange 137 in Richtung eines Pfeiles 139 und löst damit eine Verriegelung zwischen ihrem Ende 141 und einer Nase 143 der Steuerplatte 57. Weiterhin zieht die Taste 69 für schnellen Vorlauf über die Kulisse 77 die Kopfträgerplatte und damit den Tonkopf entgegen der Druckrichtung der Federn 63 vom Speicherband ab. Weiterhin wird ein Schalter 145 geschlossen, der dafür sorgt, dass der Antriebsmotor 15 an volle Spannung gelegt wird. Beim Loslassen der Taste 69 für schnellen Vorlauf wird der Abspielbetrieb bei gleichbleibender Laufrichtung wieder aufgenommen.

Beim Eindrücken der Taste 71 für schnellen Rücklauf wird, wie bei der Taste für schnellen Vorlauf, zunächst die Riegelstange 137 in Richtung des Pfeiles 139 verschoben. Die Kontur 77 zieht die Kopfträgerplatte vom Speicherband ab, und ein Wischkontakt 147 sorgt für die Richtungsumkehr der Antriebsvorrichtung, indem eine Nase 149 der Tastenstange 150 den Wischkontakt 147 beaufschlagt. Mit dem Drücken der Taste 71 für schnellen Rücklauf wird also die Bandlaufrichtung umgekehrt. Gleichzeitig erfolgt, da wieder der Schalter 145 geschlossen wird, eine Beschleunigung des Banddurchzuges. Wird die Taste 71 wieder gelöst, dann sorgt der erneut beaufschlagte Wischkontakt 147 für erneute Richtungsumkehr des Antriebsmotors und damit der gesamten Antriebsvorrichtung. Die Banddurchzugsgeschwindigkeit wird wieder auf das Laufregelmass zurückgenommen.

Bei der Beschleunigung des Banddurchzuges besteht die Gefahr, dass die Rutschkupplung 41 zu stark rutscht und der Bandtransport mithin nicht mit der gewünschten Geschwindigkeit erfolgt. Um dieser Schwierigkeit aus dem Wege zu gehen, ist der Kipphebel 103 vorgesehen. Jedesmal, wenn die Kulisse 77 die Kopfträgerplatte 55 entgegen der Wirkung der Federn 63 vom Speicherband abzieht, wird der Kipphebel 103 so weit verschwenkt, dass das Kurzschlusszahnrad 105 mit beiden Schwingenzahnrädern 37 und 39 in Eingriff kommt. Die Rutschkupplung 41 wird damit überbrückt. Das bedeutet, dass die Wickelzahnräder 49 ohne Schlupf vom Antriebsritzel 29 angetrieben werden. Beim Lösen der Taste 69 oder 71 und dem Rückkehren der entsprechenden Tastenstangen wird die Kopfträgerplatte 55 von den Druckfedern 63 wieder gegen das Speicherband gefahren, und das Kurzschlusszahnrad 105 hebt sich von den Schwingenzahnrädern 37 und 39 ab.

## Patentansprüche

1. Antriebsvorrichtung für ein auf Spulen wechselweise auf- und abwickelbares Speicherband, insbesondere Magnetband, mit zwei das Speicherband bewegenden angetriebenen Tonwellen, an die je nach Bewegungsrichtung des Speicherbandes eine zugeordnete und jeweils auf einem Schwenkhebel angeordnete Andruckrolle schaltbar ist, wobei die Schwenkhebel von einer angetriebenen Steuerplatte wechselweise verschwenkbar sind, die ihrerseits zwei fixierbare Endlagen besitzt, und mit zwei Wickeldornen für die Spulen, die wechselweise über ein Schwenkgetriebe, dessen Schwenklage von der Antriebsmotordrehrichtung abhängig ist, an den Antriebsmotor anschaltbar sind, dadurch gekennzeichnet, dass das Schwenkgetriebe (33-41) während des Laufbetriebes ein dem jeweils angetriebenen Wickeldorn (9 bzw. 11) zugeordnetes Wickelrad (49) antreibt, dass die geradlinig verschiebbare Steuerplatte (57) Umschalttriebbereiche (52) aufweist, die mit jeweils einem ersten Umschaltrad (51) des jeweils angetriebenen Wickeldorns (9 bzw. 11) zusammenarbeiten, dass beim Drehrichtungswechsel und dem dadurch verursachten Umschwenken des Schwenkgetriebes, bei dem das bis dahin angetriebene Wickelrad stillgesetzt und das stillstehende Wickelrad in umgekehrter Drehrichtung in Umlauf versetzt werden, mittels des ebenfalls in Umlauf versetzten Umschaltrades die Steuerplatte (57) so verschoben wird, dass sie über einen Hebeltrieb (59, 61) die zu dem in Umlauf versetzten Umschaltrad gehörende Andruckrolle (87) an die zugehörende Tonwelle (1 oder 3) anlegt bei gleichzeitigem Abheben der anderen Andruckrolle.

2. Antriebsvorrichtung nach Anspruch 1, dadurch gekennzeichnet, dass das Schwenkgetriebe (33-41) aus einer Schwinge (33) besteht und wenigstens einem an ihr gelagerten Schwingenrad (39), dem ein Kommutator (43) zugeordnet ist, der beim Ausbleiben von Steuersignalen infolge des Stillstehens eine Drehrichtungsumkehr des Antriebsmotors (15) veranlasst.

3. Antriebsvorrichtung nach Anspruch 2, dadurch gekennzeichnet, dass auf dem freien Schwingenende übereinander zwei Schwingenräder (37, 39) angeordnet sind, dass eines der Schwingenräder (37) vom Antriebsmotor (15) ständig angetrieben ist und dass dieses Schwingenrad (37) das andere, mit dem Kommutator (43) versehene Schwingenrad (39) über eine Rutschkupplung (41) mitnimmt.

4. Antriebsvorrichtung nach Anspruch 3, dadurch gekennzeichnt, dass das mit dem Kommutator (43) versehene Schwingenrad (39) nach Massgabe der in einer Schwenkstellung befindlichen Schwinge (33) das in der einen Schwenkstellung erreichbare Wickelrad (49) und das andere ständig angetriebene Schwingenrad (37) ein auf demselben Wickeldorn (9) wie das angetriebene Wickelrad (49) und das erste Umschaltrad (51) befindliches, zweites Umschaltrad (50) antreibt.

5. Antriebsvorrichtung nach den Ansprüchen 3 oder 4, dadurch gekennzeichnet, dass bei abgeschwenkter Kopfträgerplatte (55) während des schnellen Vor- bzw. Rücklaufes die Schwingenräder (37, 39) des Schwenkgetriebes (33-41) mittels eines Kurzschlussrades (105) überbrückt sind.

6. Antriebsvorrichtung nach einem der Ansprüche 1 bis 5, dadurch gekennzeichnet, dass die Triebbereiche der Steuerplatte (57) aus Zahnstangensegmenten (52) bestehen, die mit den als Umschaltritzeln ausgebildeten ersten Umschalträdern (51) zusammenwirken.

7. Antriebsvorrichtung nach Anspruch 4, dadurch gekennzeichnet, dass die ersten und zweiten Umschalträder (51, 50) auf den Wickelwellen (11, 13) der Wickeldorne (9) frei drehbar gelagert sind.

8. Antriebsvorrichtung nach Anspruch 6, dadurch gekennzeichnet, dass die Zahnstangensegmente (52) in der Länge und Lage zu den Umschaltritzeln (51) so bemessen bzw. angeordnet sind, dass das Zahnstangensegment (52), welches beim Umlegen des Schwenkgetriebes (33-51) mit dem in Umlauf versetzten ersten Umschaltrad bzw. -ritzel (51) in Eingriff kommt, die Steuerplatte (57) über das zugeordnete Zahnstangensegment (52) aus einer Endlage in die entgegengesetzte Endlage verschiebt, in der es ausser Eingriff kommt, während das andere Zahnstangensegment, das zuvor ausser Eingriff war, mit dem nun freilaufenden Umschaltradritzel (51) in Eingriff kommt.

9. Antriebsvorrichtung nach einem der Ansprüche 1 bis 8, dadurch gekennzeichnet, dass die Steuerplatte (57) mittels einer Totpunktfeder (12) in ihren beiden Endlagen fixiert ist.

10. Antriebsvorrichtung nach Anspruch 1, dadurch gekennzeichnet, dass die die Andruckrollen (87) tragenden Schwenkhebel (79) als Winkelhebel ausgebildet und an einer den Tonkopf tragenden Kopfträgerplatte (55) in ihrem Knickbereich (83) schwenkbar gelagert sind, dass die Winkelhebel (79) an einem Winkelarmende (85) die Andruckrolle (87) tragen, dass am anderen Winkelarmende (89) eine Zugfeder (93) angreift und dass die Kopfträgerplatte (55) entgegen der Kraft von Federn (63) mit dem Tonkopf (65) und den Andruckrollen (87) vom Speicherband abhebbar ist.

**Claims**

1. A drive mechanism for a recording tape, specifically a magnetic tape, which can alternately be taken up by and unwound from reels, which mechanism comprises two driven capstans for the transport of the recording tape, associated pressure rollers, arranged on pivotal levers, being engageable with one of said capstans depending on the direction of movement of the recording tape, which pivotal levers are alternately pivotable by a driven control plate having two fixed end positions, and two winding mandrels for the reels, which are alternately engageable with the drive motor via a pivotal transmission, whose pivotal position depends on the direction of rotation of the drive motor, characterized in that during normal operation the pivotal transmission (33-41) drives the winding gear associated with the driven winding mandrel (9 or 11), that the linearly movable control plate (57) comprises switching portions (52) which co-operate with a first switching gear (51) of the driven winding mandrel (9 or 11), and that during reversal of the direction of rotation and the consequent pivotal movement of the pivotal transmission, during which the winding gear driven so far is stopped and the stationary winding gear is set into rotation in the reverse direction, the control plate (57) is shifted in such a way by the switching gear which is now rotated that via a lever mechanism (59, 61) it positions the pressure roller (87) associated with the rotating switching gear against the associated capstan (1 or 3), the other pressure roller being lifted off simultaneously.

2. A drive mechanism as claimed in Claim 1, characterized in that the pivotal transmission (33–41) comprises a swing arm (33) and at least one swing-arm gear (39) arranged thereon, which gear is associated with a commutator (43), which in the absence of control signals produced in the stationary condition causes a reversal of the direction of rotation of the drive motor (15).

3. A mechanism as claimed in Claim 2, characterized in that two swing-arm gears (37, 39) are arranged one on top of the other on the free end of the swing-arm, that one of the swing-arm gears (37) is continuously driven by the drive motor (15), and that said swing-arm gear (37) drives the other swing-arm gear (39) provided with the commutator (43) via a slipping clutch (41).

4. A mechanism as claimed in Claim 1, characterized in that depending on the pivotal position of the swing-arm (33), the swing-arm gear (39) provided with the commutator (43) drives the winding gear (43) which is engageable in the one pivotal position and the other, continuously driven swing-arm gear (37) drives a second switching gear arranged on the same winding mandrel (9) as the driven winding gear (49) and the first switching gear (51).

5. A mechanism as claimed in Claim 3 or 4, characterized in that during fast forward or fast reverse winding with the head support (55) withdrawn the swing-arm gears (37, 39) of the pivotal transmission (33–41) are bypassed by means of a bypass gear (105).

6. A mechanism as claimed in anyone of Claims 1 to 5, characterized in that the driving portions of the control plate (57) comprise gear-rack segments (52), which co-operate with the first switching gears (51) constructed as switching pinions.

7. A mechanism as claimed in Claim 4, characterized in that first and second switching gears (51, 50) are journalled on the winding spindles (11, 13) of the winding mandrels (9) so as to be freely rotatable.

8. A mechanism as claimed in Claim 6 to 7, characterized in that the gear-rack segments (52) have such a length and are arranged in such way relative to the switching pinions (51) that the gear-rack segment (52) which during changeover of the pivotal transmission (33–51) meshes with the first switching gear of pinion (51) which has been set into rotation shifts the control plate (57) via the associated gear-rack segments (52) from one end position to the opposite end position, in which the segment is disengaged, whilst the other gear-rack segment, which was previously disengaged, now meshes with the switching pinion (51) which now rotates freely.

9. A system as claimed in anyone of Claims 1 to 8, characterized in that the control plate (57) is latched in its two end positions by means of an over-centre spring (12).

10. A mechanism as claimed in Claim 1, characterized in that the pivotal levers (79) carrying the pressure rollers (87) are constituted by angular levers and are arranged on a head support (55) carrying the magnetic head, so as to be pivotable near their angular portions (83), that the angular levers (79) carry the pressure roller (87) on one lever arm end (85), that a tension spring (93) acts on the other lever-arm end (89), and that the head support (55) with the magnetic head (65) and the pressure rollers (87) can be moved away from the recording tape against the force of springs (63).

## Revendications

1. Dispositif d'entraînement pour une bande d'enregistrement alternativement bobinée et débobinée, en particulier une bande magnétique, comportant deux cabestans qui assurent le défilement de la bande d'enregistrement et contre chacun desquels peut être appliqué, suivant le sens du défilement de la bande d'enregistrement, un galet presseur associé et monté chaque fois sur un levier pivotant, les leviers pivotants pouvant pivoter en alternance à l'intervention d'une plaque de commande entraînée qui, pour sa part, présente deux positions extrêmes pouvant être fixées, et deux mandrins d'envidage pour les bobines qui peuvent être couplés au moteur d'entraînement en alternance par l'intermédiaire d'un équipage pivotant dont la position de pivotement dépend du sens de rotation du moteur d'entraînement, caractérisé en ce que l'équipage pivotant (33–41) entraîne, pendant le fonctionnement, une roue de mandrin (49) associée au mandrin d'envidage (9, 11) entraîné respectif, la plaque de commande (57) pouvant coulisser en ligne droite présente des zones de commande de commutation (52) qui coopèrent chacune avec une première roue de commutation (51) du mandrin d'envidage entraîné respectif (9, 11), lors du renversement du sens de rotation et lors du pivotement résultant de l'équipage pivotant à la suite duquel la roue de mandrin jusqu'alors entraînée est immobilisée et la roue de mandrin immobilisée est entraînée en rotation dans le sens opposé, la plaque de commande (57) est déplacée au moyen de la roue de commutation également entraînée en rotation d'une manière telle qu'elle applique le galet presseur (87) associé à la roue de commutation entraînée en rotation contre le cabestan (1 ou 3) associé tout en écartant l'autre galet presseur.

2. Dispositif d'entraînement suivant la revendication 1, caractérisé en ce que l'équipage pivotant (33–41) est formé d'une bielle oscillante (33) et au moins d'une roue de bielle (39) montée à rotation sur cette bielle et à laquelle est associé un commutateur (43) qui, en cas d'absence de signaux de commande résultant de l'immobilisation, permet un renversement du sens de marche du moteur d'entraînement (15).

3. Dispositif d'entraînement suivant la revendication 2, caractérisé en ce que deux roues de bielle superposées (37, 39) sont montées sur l'extrémité libre de la bielle oscillante, une des roues de bielle (37) est entraînée sans interruption par le moteur d'entraînement (15) et cette roue de bielle (37) entraîne l'autre roue de bielle (39) pourvue du commutateur (43), par l'intermédiaire d'un accouplement à friction (41).

4. Dispositif d'entraînement suivant les revendications 1 et/ou 3, caractérisé en ce que la roue de bielle (39) pourvue du commutateur (43) entraîne, lorsque la bielle oscillante (33) se trouve dans une position de pivotement, la roue de mandrin (49) pouvant être atteinte dans la dite position de pivotement et l'autre roue de bielle (37) entraînée sans interruption entraîne une deuxième roue de commutation (50) se trouvant sur le même mandrin d'envidage (9) que la roue de mandrin (49) entraînée et que la première roue de commutation (51).

5. Dispositif d'entraînement suivant la revendication 3 ou 4, caractérisée en ce que, lorsque la plaque porte-tête (55) a pivoté pendant le défilement rapide en marche avant ou en marche arrière, les roues de bielle (37, 39) de l'équipage pivotant (33-41) sont pontées au moyen d'une roue de pontage (105).

6. Dispositif d'entraînement suivant l'une quelconque des revendications 1 à 5, caractérisé en ce que les zones d'entraînement de la plaque de commande (57) sont faites de segments de crémaillère (52) qui coopèrent avec des premières roues de commutation (51) ayant la forme de pignons.

7. Dispositif d'entraînement suivant la revendication 4, caractérisé en ce que la première et la seconde roue de commutation (51, 50) sont montées de manière à tourner librement sur les arbres (11, 13) des mandrins (9).

8. Dispositif d'entraînement suivant la revendication 6, caractérisé en ce que les segments de crémaillère (52) sont dimensionnés ou agencés en longueur et en position par rapport aux pignons de commutation (51) d'une manière telle que le segment de crémaillère (52) qui, lors de la commutation de l'équipage pivotant (33-51) vient en prise avec la première roue ou le premier pignon (51) de commutation entraîné en rotation, déplace la plaque de commande (57) par l'intermédiaire du segment de crémaillère (52) associé à partir d'une position extrême dans la position extrême opposée dans laquelle il est libéré tandis que l'autre segment de crémaillère, qui précédemment était libre, vient à présent en prise avec le pignon de commutation (51) qui tourne librement.

9. Dispositif d'entraînement suivant l'une quelconque des revendications 1 à 8, caractérisé en ce que la plaque de commande (57) est fixée dans ses deux positions extrêmes au moyen d'un ressort de point mort (12).

10. Dispositif d'entraînement suivant la revendication 1, caractérisé en ce que les leviers pivotants (79) portant les galets presseurs (87) ont la forme de leviers coudés et sont montés à pivot au niveau de leur coude (83) dans une plaque porte-tête (55) portant la tête d'enregistrement, les leviers coudés (79) portent les galets presseurs (87) à l'extrémité (85) d'un de leurs bras, un ressort de traction (93) agit sur l'extrémité (89) de l'autre bras et la plaque porte-tête (85) peut être écartée de la bande d'enregistrement avec la tête d'enregistrement (65) et les galets presseurs à l'encontre de la sollicitation de ressorts (63).

FIG.1

0 047 552

FIG.2